# EUROPÄISCHE PATENTSCHRIFT

(11) **EP 1 268 080 B1**
(45) Veröffentlichungstag und Bekanntmachung des Hinweises auf die Patenterteilung: **18.10.2006**
(21) Anmeldenummer: 01927854.8
(22) Anmeldetag: 03.04.2001
(51) Int. Cl.: B05B 1/16

(54) **MEHRWEGEVENTIL FÜR SANITÄRARMATUREN**
MULTIWAY VALVE FOR SANITARY FIXTURES
VANNE MULTIVOIE POUR ROBINETTERIE SANITAIRE

(30) Priorität: 05.04.2000 DE 10017044
(43) Veröffentlichungstag der Anmeldung: 02.01.2003
(73) Patentinhaber: Hansgrohe AG, 77761 Schiltach (DE)
(72) Erfinder: BLESSING, Gerd, 78052 VS-Obereschach (DE)
(74) Vertreter: Patentanwälte Ruff, Wilhelm, Beier, Dauster & Partner
(86) Internationale Anmeldenummer: PCT/EP2001/003745
(87) Internationale Veröffentlichungsnummer: WO 2001/077550

(56) Entgegenhaltungen:
- EP-A- 0 266 613
- US-A- 4 296 773
- US-A- 5 937 905

## Beschreibung

Die Erfindung geht aus von einem Mehrwegeventil für Sanitärarmaturen wie z.B. in Dokument US-5 937 905 beschrieben. Bei Sanitärarmaturen besteht häufig das Problem, dass das ein Mischventil verlassende Wasser auf verschiedene Ausgänge umgeleitet werden soll. Solche Mehrwegeventile sind häufig in den Armaturen selbst eingebaut, oder werden als getrennte Armaturen installiert. Sie dienen beispielsweise zum Umschalten von Kopfbrausen, Seitenbrausen oder Handbrausen. Die bekannten Mehrwegeventile weisen häufig einen großen Platzbedarf auf.

Der Erfindung liegt die Aufgabe zugrunde, ein Mehrwegeventil für Sanitärarmaturen zu schaffen, das einen geringen Platzbedarf benötigt und sich einfach und leicht bedienen lässt.

Zur Lösung dieser Aufgabe schlägt die Erfindung ein Mehrwegeventil mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Das von der Erfindung vorgeschlagene Mehrwegeventil enthält mindestens drei Einzelventile, zwischen denen umgeschaltet werden soll. Jedes Einzelventil enthält einen Ventilsitz und einen Verschlußkörper. Alle Verschlußkörper sind mit dem Kippelement verbunden, das in jeder Kippstellung eine andere Ventilsituation herstellt. Durch Verkippen des in einem Punkt unterstützten Kippelements kann also eine Öffnung bzw. ein Schließen der Einzelventile durchgeführt werden. Es ist möglich, dass alle Ventilsitze als Öffnungen in einem Scheiben oder plattenförmigen Element angeordnet sind, also auch auf engem Platz nebeneinander untergebracht werden können.

In Weiterbildung der Erfindung kann vorgesehen sein, dass das Mehrwegeventil derart betätigbar ist, dass mit Ausnahme des Augenblicks des Umschaltens immer nur ein einziges Einzelventil offen ist, während die anderen Einzelventile dann geschlossen sind.

In Weiterbildung der Erfindung kann das Betätigungselement derart ausgebildet sein, dass es bei seiner Betätigung ein Einzelventil öffnet und gleichzeitig ein Einzelventil schließt.

Erfindungsgemäß kann es ausreichen, wenn das Mehrwegeventil ein einziges Betätigungselement enthält, das dann auf unterschiedliche Weisen bedient wird, um ein bestimmtes Einzelventil zu öffnen oder zu schließen.

In Weiterbildung der Erfindung kann jedoch auch vorgesehen sein, dass das Mehrwegeventil eine der Zahl der zu steuernden Einzelventile entsprechende Zahl von Betätigungselementen aufweist. Hierbei kann vorgesehen sein, dass jedes Betätigungselement genau einem Einzelventil in der Weise zugeordnet ist, dass ein Betätigen des Betätigungselements zum Öffnen dieses Einzelventils führt.

Hier kann vorgesehen sein, dass das einem bestimmten Einzelventil zugeordnete Betätigungselement derart ausgebildet ist, dass es dieses Einzelventil öffnet, das vorher geöffnete Einzelventil schließt und das vorher geschlossene andere Einzelventil geschlossen lässt.

In Weiterbildung der Erfindung kann vorgesehen sein, dass das Kippelement die Form einer Platte oder Scheibe in Form eines regelmäßigen Vielecks aufweist, insbesondere bei drei Einzelventilen die Form eines gleichseitigen Dreiecks.

In Weiterbildung der Erfindung kann vorgesehen sein, dass die Verschlußkörper bzw. Verschließelemente der Einzelventile im Bereich der Ecken des Kippelements mit diesem verbunden sind. Auf diese Weise lässt sich der erforderliche Hub zum Öffnen und Schließen der Einzelventile besonders wirkungsvoll erreichen.

In Weiterbildung kann vorgesehen sein, dass die Verschließkörper der Einzelventile auch im Bereich der Mitten der Seiten mit dem Kippelement verbunden sind. Auch dies macht es möglich, einen gleichmäßigen Hub für alle Einzelventile zu erreichen.

Erfindungsgemäß kann vorgesehen sein, dass die mehreren Betätigungselemente an dem Kippelement im Bereich der Mitten von dessen Seiten angreifen.

Es ist aber auch möglich und wird von der Erfindung vorgeschlagen, dass die Betätigungselemente an dem Kippelement im Bereich von dessen Ecken angreifen.

Erfindungsgemäß kann vorgesehen sein, dass die Betätigungselemente Drucktasten sind. Diese lassen sich besonders einfach und sinnfällig bedienen. Zur Öffnung eines bestimmten Einzelventils braucht der Benutzer nur auf die entsprechende Drucktaste zu drücken.

Ein besonders wichtiger Anwendungsfall für das von der Erfindung vorgeschlagene Mehrwegeventil ist es, dieses in einer Handbrause einzubauen und die Betätigungselemente so anzuordnen, dass sie von dem Benutzer mit der die Brause an ihrem Griff haltenden Hand betätigt werden können. Dies kann beispielsweise im Bereich des Brausekopfs selbst oder auch am Griff der Brause mit Hilfe des Daumens erfolgen. Mit dem Umschaltventil können dann verschiedene Strahlarten eines Brausekopfs umgeschaltet werden, wozu bisher ein Angreifen an dem Brausekopf mit der zweiten Hand erforderlich war.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: einen Schnitt durch einen Brausekopf mit mehreren getrennten Strahlführungen;
- Fig. 2: in vergrößertem Maßstab einen Schnitt durch das in dem Brausekopf eingebaute Mehrwegeventil nach der Erfindung;
- Fig. 3: schematisch eine Draufsicht auf Einzelteile des von der Erfindung vorgeschlagenen Mehrwegeventils.

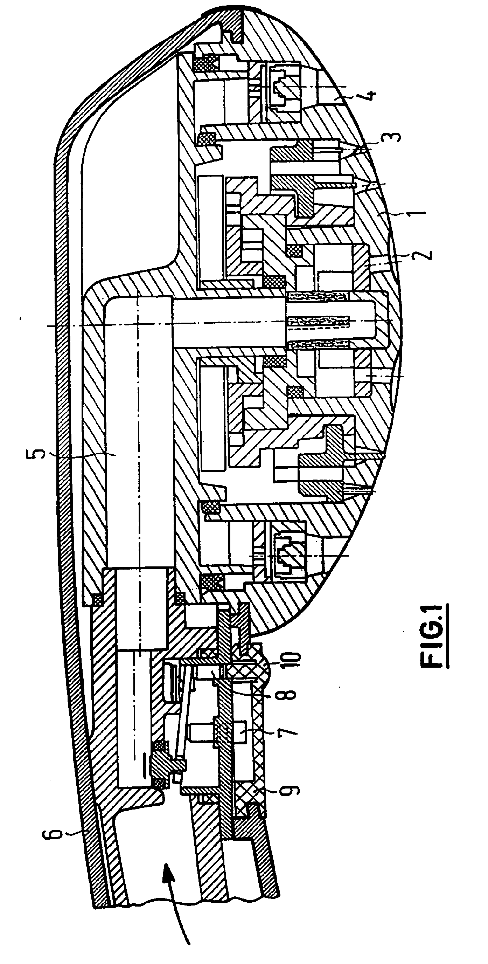

Die Figur 1 zeigt einen Längsschnitt durch einen Brausekopf mit einem Mehrwegeventil nach der Erfindung. Der Brausekopf enthält eine Strahlscheibe 1, mit drei verschiedenen Arten von Strahlaustrittöffnungen 2, 3, 4. Zu den einzelnen Arten von Strahlaustrittsöffnungen 2, 3, 4 führen getrennte Wasserführungen, von denen in dem Schnitt der Figur 1 nur eine Wasserführung 5 durchgehend dargestellt ist. Die dargestellte Wasserführung 5 führt zu einer Einrichtung, mit der Massagestrahlen durch die Strahlaustrittöffnungen 2 ausgegeben werden. Hierzu ist in dem Brausekopf eine Turbine vorhanden.

In einem die Mitte der Strahlscheibe umgebenden Bereich sind die Strahlaustrittsöffnungen 3 für einen relativ harten Wasserstrahl vorhanden, während in einem noch weiter außen gelegenen Bereich belüftete Wasserstrahlen durch die Austrittsöffnungen 4 ausgegeben werden können.

Unmittelbar vor dem Brausekopf ist am Ende des nur teilweise dargestellten Griffs 6 eine Umschalteinrichtung vorgesehen, um das durch den Griff einströmende Wasser zu den verschiedenen Strahlführungen umzuleiten. Betätigt wird die Umschalteinrichtung mit Hilfe von einzelnen Drucktasten 7, 8, die nach außen hin durch eine elastische Membran 9 abgedeckt und damit abgedichtet sind. Durch Drücken auf die durch Erhebungen 10 leichter zu findenden Drucktasten kann die Umschalteinrichtung, die ein Mehrwegeventil darstellt, betätigt werden. In der dargestellten Ausführungsform ist das Mehrwegeventil so konstruiert, dass jeweils ein Einzelventil geöffnet sein kann, das dann das einströmende Wasser in eine von drei Wasserführungen leitet.

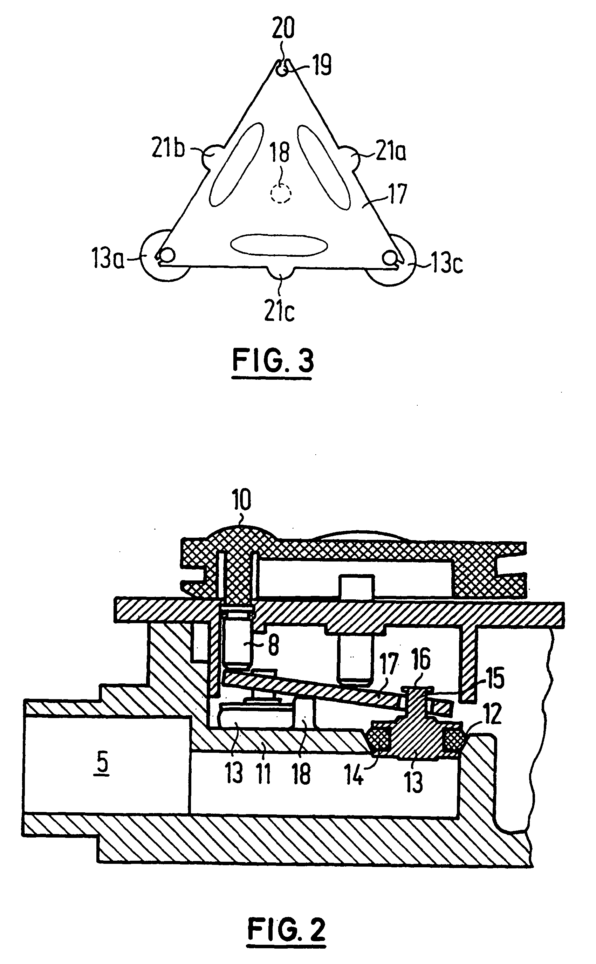

Einzelheiten dieses Mehrwegeventils sind in Figur 2 und 3 dargestellt. Das Mehrwegeventil enthält eine Platte 11, in der drei Öffnungen 12 mit einem leicht schräg verlaufenden Rand angeordnet sind. Jede Öffnung 12 führt in eine Wasserführung 5, die dann in den Brausekopf weiterführt. Jede Öffnung 12 bildet einen Ventilsitz. Zum Zusammenwirken mit den Öffnungen 12 sind Verschließelemente 13 vorgesehen, die einen umlaufenden O-Ring 14 aufweisen, der auf dem Ventilsitz 12 aufliegen kann. Auf der stromauf des Ventilsitzes 12 liegenden Seite enthalten die Verschließelemente 13 einen Ansatz 15 mit einem verbreiterten Kopf 16. Mit diesem Ansatz 15 sind die Verschließelemente 13 in einem Kippelement 17 befestigt, das etwa in seiner Mitte durch einen Zapfen 18 punktförmig unterstützt ist. In der in Figur 2 dargestellten Position ist der Ventilsitz 12, der in der Schnittebene liegt, durch den Verschließkörper 13 geschlossen, während ein hinter der Zeichnungsebene liegender Ventilsitz geöffnet ist. Dies kann man aus dem links zu sehenden Verschließkörper 13 sehen, der also aus seiner zugeordneten Öffnung herausgezogen ist. Um das in der Schnittebene liegende durch den Ventilsitz 12 und den Verschließkörper 13 gebildete Einzelventil zu öffnen, drückt der Benutzer auf die ebenfalls in der Schnittebene liegende Erhöhung 10. Dadurch wird die entsprechende Drucktaste 8 nach unten geschoben und verkippt das Kippelement 17 um eine Linie, die die punktförmige Unterstützung und ein zweites geschlossenes Einzelventil verbindet. In der dargestellten Position wird das links zu sehende Verschließelement 13 nach unten geschoben, um das zugeordnete Einzelventil zu schließen. Gleichzeitig wird das in der Schnittebene liegende Einzelventil geöffnet. Man kann dies auch so sagen, dass das durch die Drucktaste 8 dargestellte Betätigungselement dazu dient, das in der Schnittebene liegende Einzelventil zu öffnen. Für jedes Einzelventil ist eine eigene Drucktaste vorgesehen.

Das dem Mehrwegeventil nach der Erfindung zugrunde liegende Prinzip wird am besten unter Bezugnahme auf die Figur 3 beschrieben. Die drei Einlaßventile liegen bei der dargestellten Ausführungsform in einer Ebene, alle Verschließkörper 13 und alle Ventilsitze 12 sind identisch ausgebildet. Das Kippelement 17 weist die Form eines gleichseitigen Dreiecks auf, an dessen Ecken die Verschließelemente 13 befestigt sind. In der Figur 3 ist an dem Kippelement 17 oben das Verschließelement 13 weggelassen worden. Von der Ecke geht ein Schlitz 20 in das Dreieck hinein, der sich dort zu einer runden Öffnung 19 erweitert. Das Verschließelement 13 wird von der Ecke her durch den Schlitz 20 mit seinem Ansatz 15 eingedrückt und bleibt dann in der Öffnung 19 hängen. Der Schlitz 20 ist etwas schmaler als der Durchmesser des Ansatzes 15. Auf diese Weise ist an allen drei Ecken des Kippelements 17 jeweils ein Verschließkörper 13 gehaltert. Die Verschließkörper haben ein gewisses Spiel, um einen Winkel auszugleichen, der beim Verkippen des Kippelements 17 vorhanden ist. Sie sind jedoch in Druckrichtung und Zugrichtung, also senkrecht zur Zeichnungsebene, mit dem Kippelement 17 verbunden.

Etwa in der Mitte der Seite des Kippelements 17 ist jeweils eine Verbreiterung 21 ausgebildet, die eine Angriffsstelle für die Drucktaste 8 bildet. Die Drucktasten 8 greifen etwa senkrecht zur Ebene des Kippelements 17 an diesem an. Sie sind mit dem Kippelement 17 jedoch nicht verbunden.

Das Kippelements 17 ist im Bereich seines Mittelpunktes durch den Zapfen 18 unterstützt. Diese Unterstützung ist im wesentlichen punktförmig.

Bei der folgenden Diskussion soll eine Ausgangssituation angenommenen werden, bei der die Verschließkörper 13 a und 13 c in den Ventilsitzen 12 sitzen und die zugeordneten Einzelventile also geschlossen sind. In diesem Fall ist das oben in Figur 3 zu denkende Einzelventil geöffnet, was sich einfach aus der Geometrie, nämlich der Höhe des Zapfens 18 ergibt. Drückt jetzt ein Benutzer auf die der Verbreiterung 21 zugeordnete Drucktaste, so wird das Kippelement 17 um eine Achse verkippt, die den Unterstützungspunkt 18 mit dem Verschließkörper 13 c verbindet. Dies bedeutet, dass das bislang geöffnete Einzelventil, oben in Figur 3, geschlossen und das links in Figur 3 angeordnete Einzelventil, repräsentiert durch den Verschließkörper 13 a, geöffnet wird. Die in der Mitte einer Seite des gleichseitigen Dreiecks angreifende Drucktaste ist also dem an der gegenüberliegenden Spitze des Dreiecks angeordneten Einzelventil zugeordnet.

## Patentansprüche

1. Mehrwegeventil für Sanitärarmaturen, mit
1.1 Einzelventilen, die jeweils
1.1.1 einen Ventilsitz (12) und
1.1.2 einen diesem gegenüber bewegbaren Verschließkörper (13) aufweisen,
1.2 einem Kippelement (17), das
1.2.1 an seinem Umfang mit den Verschließkörpern (13) der Einzelventile zu deren Betätigung verbunden ist und
1.2.2 in seinem mittleren Bereich zur Bildung eines Kipppunktes punktförmig unterstützt ist, sowie mit
1.3 mindestens einem Betätigungselement, das
1.3.1 zum Verkippen des Kippelementes (17) und dadurch zum Betätigen der Einzelventile angeordnet ist, **dadurch gekennzeichnet, daß** mindestens drei Einzelventile vorgesehen sind.

2. Mehrwegeventil nach Anspruch 1, bei dem das Mehrwegeventil derart betätigbar ist, dass nur ein Einzelventil offen ist.

3. Mehrwegeventil nach Anspruch 1 oder 2, bei dem das Betätigungselement derart ausgebildet ist, dass es bei seiner Betätigung ein Einzelventil öffnet und ein Einzelventil schließt.

4. Mehrwegeventil nach einem der vorhergehenden Ansprüche, mit einem Betätigungselement für jedes Einzelventil.

5. Mehrwegeventil nach einem der vorhergehenden Ansprüche, bei dem das einem bestimmten Einzelventil zugeordnete Betätigungselement derart ausgebildet ist, dass es dieses Einzelventil öffnet, das vorher geöffnete Einzelventil schließt und das vorher geschlossene Einzelventil geschlossen hält.

6. Mehrwegeventil nach einem der vorhergehenden Ansprüche, bei dem das Kippelement (17) die Form eines regelmäßigen Vielecks aufweist, insbesondere bei drei Einzelventilen die Form eines gleichseitigen Dreiecks.

7. Mehrwegeventil nach einem der vorhergehenden Ansprüche, bei dem die Verschließelemente (13) der Einzelventile im Bereich der Ecken des Kippelements (17) mit diesem verbunden sind.

8. Mehrwegeventil nach einem der vorhergehenden Ansprüche, bei dem die Verschließelemente (13) der Einzelventile im Bereich der Mitten der Seiten des Kippelements (17) mit diesem verbunden sind.

9. Mehrwegeventil nach einem der vorhergehenden Ansprüche, bei dem die Betätigungselemente an dem Kippelement (17) im Bereich der Mitten von dessen Seiten angreifen.

10. Mehrwegeventil nach einem der vorhergehenden Ansprüche, bei dem die Betätigungselemente an dem Kippelement (17) im Bereich von dessen Ecken angreifen.

11. Mehrwegeventil nach einem der vorhergehenden Ansprüche, bei dem das/die Betätigungselement(en) Drucktasten (8) ist/sind.

12. Mehrwegeventil nach einem der vorhergehenden Ansprüche, bei dem das Mehrwegeventil in einer Handbrause eingebaut ist und die Betätigungselemente so angeordnet sind, dass sie von dem Benutzer mit der die Handbrause haltenden Hand betätigt werden können.

## Claims

1. Multiway valve for sanitary fittings, with
1.1 at least three individual valves, which each
1.1.1 feature a valve seat (12) and
1.1.2 a closing body (13) that is movable relative to said seat,
1.2 a tilt element (17) that
1.2.1 on its circumference is connected with the closing bodies (13) of the individual valves for their operation and
1.2.2 to form a tilt point in its middle area it is supported on a point and with
1.3 at least one operating element which
1.3.1 is provided for tilting the tilt element (17), thus for operating the individual valves, **characterised in that** at least three individual valves are provided.

2. Multiway valve according to claim 1, wherein the multiway valve is operable in such a manner that only an individual valve is open.

3. Multiway valve according to claim 1 or 2, wherein the operating element is formed in such a manner that, when operated, an individual valve opens and an individual valve closes.

4. Multiway valve according to one of the preceding claims, with an operating element for each individual valve.

5. Multiway valve according to one of the preceding claims, wherein the operating element assigned to a specific individual valve is formed such that it opens this individual valve, closes the initially opened individual valve and the initially closed individual valve remains closed.

6. Multiway valve according to one of the preceding claims, wherein the tilt element (17) features the shape of a regular polygon, particularly for three individual valves in the shape of an equilateral triangle.

7. Multiway valve according to one of the preceding claims, wherein the closing elements (13) of the individual valves are joined with the same in the corner areas of the tilt element (17).

8. Multiway valve according to one of the preceding claims, wherein the closing elements (13) of the individual valves in the middle area of the sides of the tilt element (17) are joined with the latter.

9. Multiway valve according to one of the preceding claims, wherein the operating elements act on the tilt element (17) in the middle area of its sides.

10. Multiway valve according to one of the preceding claims, wherein the operating elements act on the tilt element (17) in its corner areas.

11. Multiway valve according to one of the preceding claims, wherein the operating element(s) is(are) buttons (8).

12. Multiway valve according to one of the preceding claims, wherein the multiway valve is installed in a shower handset and the operating elements are arranged such that they can be operated by the user using the hand holding the shower handset.

## Revendications

1. Vanne à plusieurs voies pour robinetterie sanitaire comprenant
1.1 au moins trois vannes individuelles, chacune comportant
1.1.1 un siège de vanne (12) et
1.1.2 un élément d'obturation (13) mobile par rapport à ce dernier,
1.2 un élément basculant (17) lequel est relié
1.2.1 sur sa circonférence aux éléments d'obturation (13) des vannes individuelles pour permettre leur commande et
1.2.2 lequel est soutenu ponctuellement dans sa zone centrale pour constituer un point de basculement, et
1.3 au moins un élément de manoeuvre
1.3.1 prévu pour le basculement de l'élément basculant (17) et, de ce fait, pour la commande des vannes individuelles, **caractérisée en ce que** trois vannes individuelles au moins sont prévues.

2. Vanne à plusieurs voies selon la revendication 1, selon laquelle la vanne peut être commandée de manière à permettre l'ouverture d'une seule vanne individuelle.

3. Vanne à plusieurs voies selon la revendication 1 ou 2, selon laquelle l'élément de manoeuvre est réalisé de manière à permettre lors de son actionnement l'ouverture d'une vanne individuelle et la fermeture d'une vanne individuelle.

4. Vanne à plusieurs voies selon l'une quelconque des revendications précédentes comportant un élément de manoeuvre pour chaque vanne individuelle.

5. Vanne à plusieurs voies selon l'une quelconque des revendications précédentes selon laquelle l'élément de manoeuvre affecté à une vanne individuelle déterminée est réalisé de manière à permettre l'ouverture de cette vanne individuelle, la fermeture de la vanne individuelle précédemment ouverte et le maintien en position fermée de la vanne individuelle précédemment fermée.

6. Vanne à plusieurs voies selon l'une quelconque des revendications précédentes selon laquelle l'élément basculant (17) a la forme d'un polygone régulier, notamment la forme d'un triangle équilatéral dans le cas de trois vannes individuelles.

7. Vanne à plusieurs voies selon l'une quelconque des revendications précédentes selon laquelle les éléments d'obturation (13) des vannes individuelles sont reliés à l'élément basculant (17) au niveau des coins de ce dernier.

8. Vanne à plusieurs voies selon l'une quelconque des revendications précédentes selon laquelle les éléments d'obturation (13) des vannes individuelles sont reliés à l'élément basculant (17) au niveau des milieux des côtés de ce dernier.

9. Vanne à plusieurs voies selon l'une quelconque des revendications précédentes selon laquelle les éléments de manoeuvre agissent sur l'élément basculant (17) au niveau des milieux des côtés de ce dernier.

10. Vanne à plusieurs voies selon l'une quelconque des revendications précédentes selon laquelle les éléments de manoeuvre agissent sur l'élément basculant (17) au niveau des coins de ce dernier.

11. Vanne à plusieurs voies selon l'une quelconque des revendications précédentes selon laquelle l'(les) élément(s) de manoeuvre est(sont) des bouton(s)-poussoir(s) (8).

12. Vanne à plusieurs voies selon l'une quelconque des revendications précédentes selon laquelle la vanne à plusieurs voies est intégrée à une douche à main et les éléments de manoeuvre sont disposés de manière à permettre leur actionnement par l'utilisateur avec la main avec laquelle il tient la douche à la main.
